(19) Europäisches Patentamt European Patent Office Office européen des brevets

(11) **EP 4 738 406 A1**

(12) **EUROPEAN PATENT APPLICATION**
published in accordance with Art. 153(4) EPC

(43) Date of publication:
**06.05.2026 Bulletin 2026/19**

(21) Application number: **24851448.1**

(22) Date of filing: **28.06.2024**

(51) International Patent Classification (IPC):
*H01G 4/30* (2006.01)

(52) Cooperative Patent Classification (CPC):
**H01G 4/30**

(86) International application number:
**PCT/JP2024/023573**

(87) International publication number:
**WO 2025/033017 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.08.2023 JP 2023128837**

(71) Applicant: **Murata Manufacturing Co., Ltd.
Nagaokakyo-shi, Kyoto 617-8555 (JP)**

(72) Inventors:
• **IWATA Shun
Nagaokakyo-shi, Kyoto 617-8555 (JP)**
• **SHIMADA Yasuyuki
Nagaokakyo-shi, Kyoto 617-8555 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **MULTILAYER CERAMIC CAPACITOR**

(57) Provided is a multilayer ceramic capacitor that can be reduced in size with increased capacity and also has high reliability. In a laminate 10 of the multilayer ceramic capacitor, when a region in which internal electrode layers 30 overlap with one another when viewed from a lamination direction T is defined as an effective part 11, facing regions which sandwich the effective part 11 from the width direction W are respectively defined as a first side surface-side outer layer portion WG1 and a second side surface-side outer layer portion WG2, and facing regions which sandwich the effective part 11, the first side surface-side outer layer portion WG1, and the second side surface-side outer layer portion WG2 from the lamination direction T are respectively defined as a first main surface-side outer layer portion TG1 and a second main surface-side outer layer portion TG2, the porosity Pw (%) of the first side surface-side outer layer portion or the second side surface-side outer layer portion, and the porosity Pwt (%) of the first main surface-side outer layer portion TG1 or the second main surface-side outer layer portion TG2 satisfy the relational formula (1).

$$(1): 1.6 \leq Pwt - Pw \leq 3.1$$

FIG. 2

**Description**

TECHNICAL FIELD

The present invention relates to a multilayer ceramic capacitor.

BACKGROUND ART

Conventionally, multilayer ceramic capacitors widely used in electronic devices such as mobile phones and portable music players each include an inner layer portion that includes a stack of a plurality of dielectric layers made of ceramic material and a plurality of internal electrode layers to generate capacitance, outer layer portions provided on both sides of the inner layer portion in the lamination direction, and side margin portions provided on both sides of the inner layer portion in the width direction.

With the recent reduction in size and improvement in performance of electronic devices, multilayer ceramic capacitors are also required to be reduced in size and increased in capacity. In order to achieve a reduction in size and increase in capacity in multilayer ceramic capacitors, means such as for reducing the thickness of the side margin portions and increasing the area of the internal electrode layers can be considered. However, when the thickness of the side margin portions is reduced, resistance to moisture penetrating between the lateral surfaces of the multilayer body and the external electrodes and reaches the internal electrode layers at the end surfaces of the multilayer body, that is, moisture resistance, is lowered, and as a result, the reliability may be lowered.

Therefore, there is a need to develop multilayer ceramic capacitors that have high reliability while achieving a reduction in size and increase in capacity.

Citation List Patent Document

Patent Document 1: Japanese Unexamined Patent Application, Publication No. 2014-150240

DISCLOSURE OF THE INVENTION

Problems to be Solved by the Invention

It is an object for the present invention to provide multilayer ceramic capacitors each having high reliability while achieving a reduction in size and increase in capacity. Means for Solving the Problems

The present inventors have found that, in a multilayer ceramic capacitor including a multilayer body including a plurality of dielectric layers and a plurality of internal electrode layers that are laminated, and external electrodes provided to be electrically conductive with the internal electrode layers, when the pore ratio Pw of the first lateral surface-side outer layer portion or the second lateral surface-side outer layer portion and the pore ratio Pwt of the first main surface-side outer layer portion or the second main surface-side outer layer portion are adjusted to have a predetermined relationship, moisture resistance is improved and high reliability can be obtained, while achieving a reduction in size and increase in capacity, and thereby completed the present invention.

An embodiment of the present invention provides a multilayer ceramic capacitor which includes a multilayer body including a plurality of dielectric layers and a plurality of internal electrode layers that are laminated, and external electrodes each provided to be electrically conductive with the internal electrode layers. The multilayer body includes a first main surface and a second main surface opposed to each other in a lamination direction in which the plurality of dielectric layers and the plurality of internal electrode layers are laminated, a first lateral surface and a second lateral surface opposed to each other in a width direction that intersects both the lamination direction and a length direction in which each of the plurality of internal electrode layers extends toward a corresponding one of the external electrodes, and a first end surface and a second end surface opposed to each other in the length direction that intersects the lamination direction and the width direction. Each of the external electrodes is on one of the first end surface or the second end surface. In the multilayer body, when a region where the plurality of internal electrode layers overlap each other when viewed in the lamination direction is defined as an effective portion, opposing regions sandwiching the effective portion in the width direction are defined as a first lateral surface-side outer layer portion and a second lateral surface-side outer layer portion, opposing regions sandwiching the effective portion in the length direction are defined as a first end surface-side outer layer portion and a second end surface-side outer layer portion, and opposing regions sandwiching the effective portion, the first lateral surface-side outer layer portion, the second lateral surface-side outer layer portion, the first end surface-side outer layer portion, and the second end surface-side outer layer portion in the lamination direction are defined as a first main surface-side outer layer portion and a second main surface-side outer layer portion, a pore ratio Pw (%) of the first lateral surface-side outer layer portion or the second lateral surface-side outer layer portion and a pore ratio Pwt (%) of the first main surface-side outer layer portion or the second main surface-side outer layer portion satisfy the following relational expression (1):

$$1.6 \leq Pwt-Pw \leq 3.1 \ ... \ (1).$$

Effects of the Invention

According to an embodiment of the present invention, even when a reduction in size and increase in capacity are achieved, it is possible to prevent moisture penetration from outside by forming the lateral surface-side outer layer portions of the multilayer body with dense dielectric, such that it is possible to provide multilayer ceramic capacitors each having high moisture resistance reliability.

BRIEF DESCRIPTION OF THE DRAWINGS

FIG. 1 is an external perspective view of a multilayer ceramic capacitor 1 according to an embodiment of the present invention.
FIG. 2 is a cross-sectional view of the multilayer ceramic capacitor 1 taken along the line II-II shown in FIG. 1.
FIG. 3 is a cross-sectional view of the multilayer ceramic capacitor 1 taken along the line III-III shown in FIG. 1.
FIG. 4 is a cross-sectional view of the multilayer ceramic capacitor 1 taken along the line IV-IV shown in FIG. 3.
FIG. 5 is a cross-sectional view of the multilayer ceramic capacitor 1 taken along the line V-V shown in FIG. 3.
FIG. 6 is an exploded perspective view for explaining the lamination state of the multilayer body 10 of the multilayer ceramic capacitor 1.
FIG. 7 is a flowchart for explaining a manufacturing method of the multilayer ceramic capacitor 1.
FIG. 8 is a perspective view of a material sheet 203 on which an internal electrode layer pattern 103 functioning as an internal electrode layer 30 of the multilayer ceramic capacitor 1 is printed on the surface of a ceramic green sheet 101.
FIG. 9 is a perspective view showing a state where ceramic paste 102 is provided on the material sheet 203. FIG. 10 is a diagram for explaining a lamination state of the material sheet 203.

PREFERRED MODE FOR CARRYING OUT THE INVENTION

In the following, a multilayer ceramic capacitor will be described as an embodiment of the present invention, but the present invention is not limited thereto. Also, the drawings may be schematically simplified to explain the content of the invention, and the ratio of dimensions of the components or between components depicted may not match the ratio of their dimensions described in the specification. Also, components described in the specification may be omitted in the drawings, or the number of components may be reduced in the drawings.

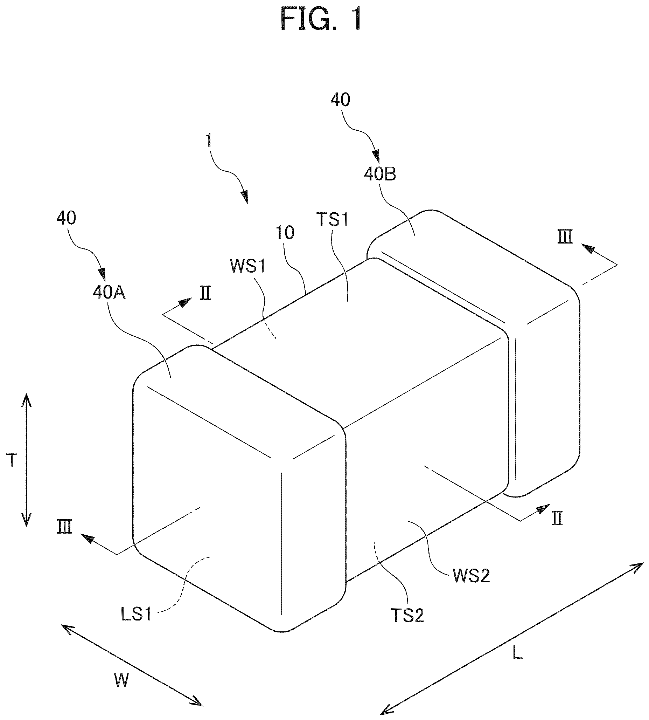

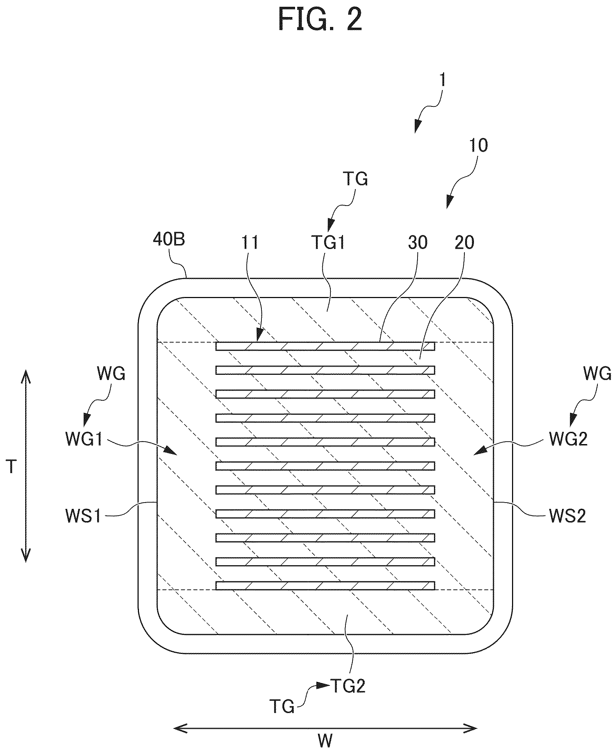

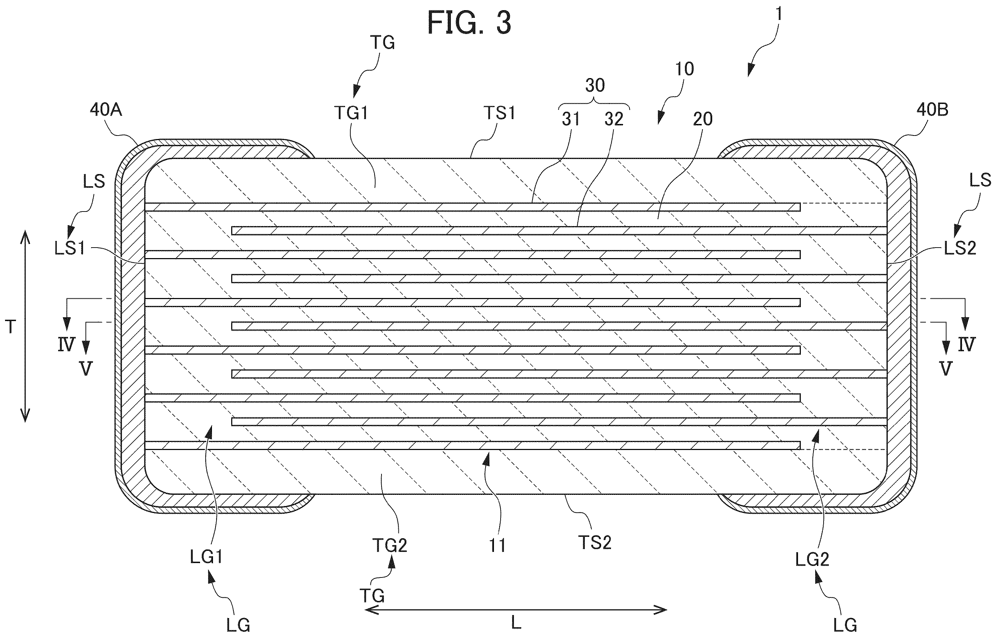

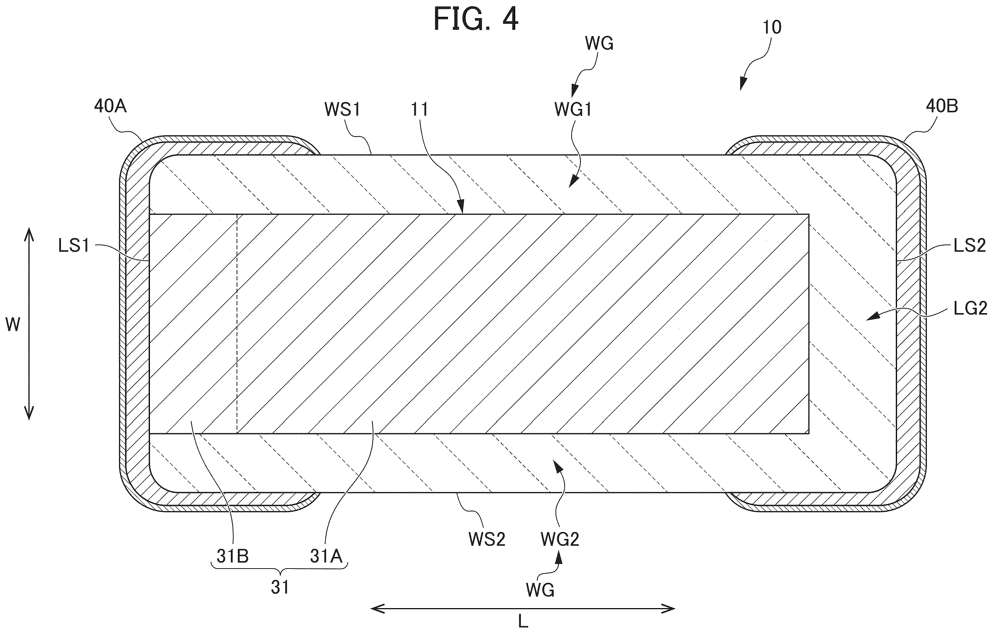

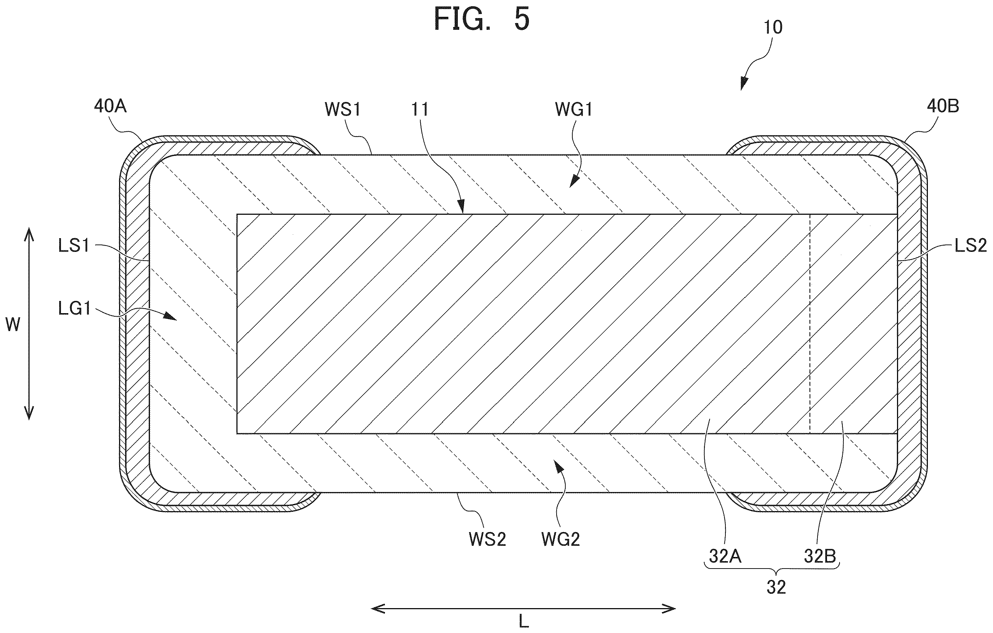

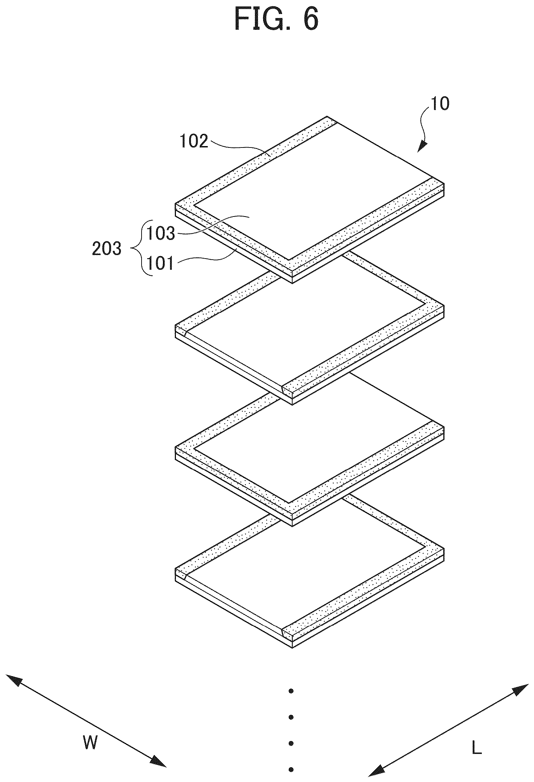

FIG. 1 is a schematic perspective view of a multilayer ceramic capacitor 1 according to an embodiment of the present invention. FIG. 2 is a cross-sectional view of the multilayer ceramic capacitor 1 taken along the line II-II shown in FIG. 1. FIG. 3 is a cross-sectional view of the multilayer ceramic capacitor 1 taken along the line III-III shown in FIG. 1. FIG. 4 is a cross-sectional view of the multilayer ceramic capacitor 1 taken along the line IV-IV shown in FIG. 3. FIG. 5 is a cross-sectional view of the multilayer ceramic capacitor 1 taken along the line V-V shown in FIG. 3. FIG. 6 is an exploded perspective view for explaining a lamination state of the multilayer body 10 of the multilayer ceramic capacitor 1. The line II-II passes through the middle portion of the multilayer ceramic capacitor 1 in the length direction L described later, and the line III-III passes through the middle portion in the width direction W described later.

In the following description, as terms expressing the orientation of the multilayer ceramic capacitor 1, a direction in which the pair of external electrodes 40 are provided is defined as the length direction L. A direction in which the dielectric layers 20 and the internal electrode layers 30 are laminated is defined as the lamination direction T. A direction intersecting both the length direction L and the lamination direction T is defined as the width direction W. In the embodiments, the length direction L, the lamination direction T, and the width direction W are orthogonal to each other. The cross section shown in FIG. 2 is also referred to as a WT cross section because it is parallel to the width direction W and the lamination direction T. The cross section shown in FIG. 3 is also referred to as an LT cross section because it is parallel to the length direction L and the lamination direction T. The cross sections shown in FIGS. 4 and 5 are also referred to as LW cross sections because they are parallel to the length direction L and the width direction W.

(Multilayer Ceramic Capacitor 1)

The multilayer ceramic capacitor 1 includes a multilayer body 10 including a plurality of dielectric layers 20 and a plurality of internal electrode layers 30 that are laminated, and a pair of external electrodes 40 provided at both ends of the multilayer body 10.

(Multilayer Body 10)

The multilayer body 10 has a substantially rectangular parallelepiped shape. It is preferable that the corner portions and ridge portions of the multilayer body 10 are rounded. The corner portions are portions where three surfaces of the multilayer body intersect, and the ridge portions are portions where two surfaces of the multilayer body intersect. The dimension of the multilayer body 10 in the length direction L is not necessarily longer than the dimension in the width direction W. Also, irregularities may be provided on a portion or all of the surfaces constituting the multilayer body 10.

The dimensions of the multilayer body 10 are not particularly limited, but when the dimension in the length direction L of the multilayer body 10 is defined as an L dimension, the L dimension is preferably 0.2 mm or more and 10 mm or less. Also, when the dimension in the lamination direction T of the multilayer body 10 is defined as a T dimension, the T dimension is preferably 0.1 mm or more and 10 mm or less. Further, when the dimension in the width direction W of the multilayer body 10 is defined as a W dimension, the W dimension is preferably 0.1 mm or more and 10 mm or less.

As shown in FIGS. 1 to 3, the multilayer body 10 includes a first main surface TS1 and a second main surface TS2 opposed to each other in the lamination direction T, a first lateral surface WS1 and a second lateral surface WS2 opposed to each other in the width direction W intersecting the lamination direction T, and a first end surface LS1 and a second end surface LS2 opposed to each other in the length direction L intersecting the lamination direction T and the width direction W.

(Dielectric Layer 20)

The plurality of dielectric layers 20 laminated in the multilayer body 10 may be made of ceramic material. As the ceramic material, for example, a dielectric ceramic having $BaTiO_3$ as a main component is used. Also, as the ceramic material, a material obtained by adding at least one secondary component such as a Mn compound, Fe compound, Cr compound, Co compound, and Ni compound to these main components may be used.

The thickness of the dielectric layer 20 is preferably 0.5 $\mu$m or more and 72 $\mu$m or less. The number of the dielectric layers 20 to be laminated is preferably 10 or more and 700 or less. The number of the dielectric layers 20 is the total number of the dielectric layers of the effective portion 11 and the dielectric layers of the main surface-side outer layer portion TG including the first main surface-side outer layer portion TG1 and the second main surface-side outer layer portion TG2.

(Internal Electrode Layer 30)

The plurality of internal electrode layers 30 laminated in the multilayer body 10 include first internal electrode layers 31 and second internal electrode layers 32. The plurality of first internal electrode layers 31 are each provided on a corresponding one of the plurality of dielectric layers 20, and similarly, the plurality of second internal electrode layers 32 are each provided on a corresponding one of the plurality of dielectric layers 20. The plurality of first internal electrode layers 31 and the plurality of second internal electrode layers 32 are alternately provided in the lamination direction T of the multilayer body 10.

Each of the first internal electrode layers 31 includes a first counter portion 31A opposed to a corresponding one of the second internal electrode layers 32, and a first extension portion 31B extending from the first counter portion 31A toward the first end surface LS1. The first extension portion 31B is exposed at the first end surface LS1.

Each of the second internal electrode layers 32 includes a second counter portion 32A opposed to a corresponding one of the first internal electrode layers 31, and a second extension portion 32B extending from the second counter portion 32A toward the second end surface LS2. The second extension portion 32B is exposed at the second end surface LS2.

The first internal electrode layers 31 and the second internal electrode layers 32 include appropriate electrically conductive materials such as metals such as Ni, Cu, Ag, Pd, and Au, alloys containing at least one of these metals, and the like. When an alloy is used, the first internal electrode layers 31 and the second internal electrode layers 32 may include, for example, an Ag-Pd alloy.

The thickness of each of the first internal electrode layers 31 and the second internal electrode layers 32 is preferably, for example, about 0.2 $\mu$m or more and 3.0 $\mu$m or less. The total number of the first internal electrode layers 31 and the second internal electrode layers 32 is preferably five or more and 350 or less.

(External Electrode 40)

The external electrodes 40 include a first external electrode 40A and a second external electrode 40B.

The first external electrode 40A is provided adjacent to the first end surface LS1. The first external electrode 40A is connected to the first internal electrode layers 31. The first external electrode 40A is provided on the first end surface LS1, but may be provided on at least one of the first main surface TS1, the second main surface TS2, the first lateral surface WS1, and the second lateral surface WS2 in addition to on the first end surface LS1. In the present embodiment, the first external electrode 40A is provided on a portion of the first main surface TS1, a portion of the second main surface TS2, a portion of the first lateral surface WS1, and a portion of the second lateral surface WS2, in addition to on the first end surface LS1. The first external electrode 40A may be provided, for example, from the first end surface LS1 to either the first main surface TS1 or the second main surface TS2. That is, the cross-sectional shape of the first external electrode 40A may be L-shaped (not shown).

The second external electrode 40B is provided adjacent to the second end surface LS2. The second external electrode 40B is connected to the second internal electrode layers 32. The second external electrode 40B is provided on the second end surface LS2, but, may be provided on at least one of the first main surface TS1, the second main surface TS2, the first lateral surface WS1, and the second lateral surface WS2 in addition to on the second end surface LS2. In the present embodiment, the second external electrode 40B is provided on a portion of the first main surface TS1, a portion of the second main surface TS2, a portion of the first lateral surface WS1, and a portion of the second lateral surface WS2, in addition to on the second end surface LS2. The second external electrode 40B may be provided, for example, from the second end surface LS2 to either the first main surface TS1 or the second main surface TS2. That is, the cross-sectional shape of the second external electrode 40B may be L-shaped (not shown).

In the multilayer body 10, capacitance is generated by the first counter portions 31A of the first internal electrode layer 31 and the second counter portions 32A of the second internal electrode layer 32 opposing each other with the dielectric layers 20 interposed therebetween. Therefore, the function of the capacitor is exhibited between the first external electrode 40A to which the first internal electrode layers 31 are connected and the second external electrode 40B to which the second internal electrode layers 32 are connected.

The first external electrode 40A and the second external electrode 40B each may include, for example, a base electrode layer and a plated layer provided on the base electrode layer. The base electrode layer is formed by applying an electrically conductive paste containing a metal component and a glass component to the first end surface LS1 and the second end surface LS2 of the multilayer body 10, and then firing the resultant product. As the metal component to be blended in the electrically conductive paste, for example, metals such as Cu, Ni, Ag, Pd, and Au, or alloys such as Ag and Pd can be used.

The plated layer provided on the base electrode layer includes at least one of a metal such as Cu, Ni, Ag, Pd, and Au, or an alloy of Ag, Pd or the like. The plated layer may include, for example, a two-layer configuration of a Ni plated layer and a Sn plated layer. However, the plated layer may include a single layer or multiple layers.

The multilayer body 10 includes, as regions constituting the multilayer body 10, an effective portion 11 where the internal electrode layers 30 overlap with each other when viewed from the lamination direction T to form capacitance, main surface-side outer layer portions TG sandwiching the effective portion 11 from the lamination direction T, lateral surface-side outer layer portions WG sandwiching the effective portion 11 from the width direction W intersecting the lamination direction T, and end surface-side outer layer portions LG sandwiching the effective portion 11 from the length direction L intersecting the lamination direction T and the width direction W.

(Effective Portion 11)

The effective portion 11 is a portion that generates capacitance and substantially functions as a capacitor by the first counter portions 31A of the first internal electrode layers 31 and the second counter portions 32A of the second internal electrode layers 32 opposing each other with the dielectric layers 20 interposed therebetween in the multilayer body 10.

(Lateral Surface-Side Outer Layer Portion WG)

The lateral surface-side outer layer portion WG includes a first lateral surface-side outer layer portion WG1 and a second lateral surface-side outer layer portion WG2. The first lateral surface-side outer layer portion WG1 is positioned between the active portion 11 and the first lateral surface WS1, and is a portion that includes the dielectric layer 20. The second lateral surface-side outer layer portion WG2 is positioned between the active portion 11 and the second lateral surface WS2, and is a portion that includes the dielectric layer 20. FIG. 2 shows the ranges of the first lateral surface-side outer layer portion WG1 and the second lateral surface-side outer layer portion WG2 in the WT cross section of the multilayer ceramic capacitor 1. The lateral surface-side outer layer portion WG is also referred to as a W gap, side gap, or side margin portion.

(End Surface-Side Outer Layer Portion LG)

The end surface-side outer layer portion LG includes a first end surface-side outer layer portion LG1 and a second end surface-side outer layer portion LG2. The first end surface-side outer layer portion LG1 is positioned between the active portion 11 and the first end surface LS1, and is a portion that includes the dielectric layer 20. The second end surface-side outer layer portion LG2 is positioned between the active portion 11 and the second end surface LS2, and is a portion that includes the dielectric layer 20. FIG. 3 shows the ranges of the first end surface-side outer layer portion LG1 and the second end surface-side outer layer portion LG2 in the LT cross section of the multilayer ceramic capacitor 1. The end surface-side outer layer portion LG is also referred to as an L gap, end gap, or end margin portion.

(Main Surface-Side Outer Layer Portion TG)

The multilayer body 10 includes main surface-side outer layer portions TG including a first main surface-side outer layer portion TG1 and a second main surface-side outer layer portion TG2 in regions opposing each other that sandwich the active portion 11, the first lateral surface-side outer layer portion WG1, the second lateral surface-side outer layer portion WG2, the first end surface-side outer layer portion LG1, and the second end surface-side outer layer portion LG2, from the lamination direction T.

The first main surface-side outer layer portion TG1 is located adjacent to the first main surface TS1 of the multilayer body 10. The first main surface-side outer layer portion TG1 can be formed by laminating a plurality of dielectric layers 20 as ceramic layers positioned between the first main surface TS1 and an internal electrode layer 30 closest to the first main surface TS1. The dielectric layer 20 used in the first main surface-side outer layer portion TG1 may be the same as the dielectric layer 20 used in the active portion 11.

The second main surface-side outer layer portion TG2 is located adjacent to the second main surface TS2 of the multilayer body 10. The second main surface-side outer layer portion TG2 can be formed by laminating a plurality of dielectric layers 20 as ceramic layers positioned between the second main surface TS2 and an internal electrode layer 30 closest to the second main surface TS2. The dielectric layer 20 used in the second main surface-side outer layer portion TG2 may be the same as the dielectric layer 20 used in the active portion 11.

The pore ratio Pw (%) of the first lateral surface-side outer layer portion or the second lateral surface-side outer layer portion and the pore ratio Pwt (%) of the first main surface-side outer layer portion or the second main surface-side outer layer portion satisfy the following relational expression (1).

$$1.6 \leq Pwt-Pw \leq 3.1 \ ... \ (1)$$

The pore ratio Pw of the first lateral surface-side outer layer portion WG1 or the second lateral surface-side outer layer portion WG2 can be obtained by targeting a WT cross section of a region located at the middle in the width direction W and at the middle in the lamination direction T of the first lateral surface-side outer layer portion WG1 positioned between the active portion 11 and the first lateral surface WS1 or the second lateral surface-side outer layer portion WG2 positioned between the active portion 11 and the second lateral surface WS2, and calculating the ratio of the area occupied by pores in this WT cross section. As a specific method, the targeted WT cross section is imaged by a scanning electron microscope (SEM), the area of the field of view and the area occupied by the pores are obtained from analysis of the captured SEM image, and the pore ratio Pw (%) can be calculated by the formula: pore ratio Pw (%) = area occupied by pores / area of field of view $\times$ 100.

Further, the pore ratio Pwt of the first main surface-side outer layer portion TG1 or the second main surface-side outer layer portion TG2 can be obtained by targeting a WT cross section of a region located in the lamination direction T from the region where the pore ratio Pw of the first lateral surface-side outer layer portion WG1 positioned between the active portion 11 and the first lateral surface WS1 or the second lateral surface-side outer layer portion WG2 positioned between the active portion 11 and the second lateral surface WS2 is measured, and located at the middle of the thickness in the lamination direction T of the first main surface-side outer layer portion TG1 or the second main surface-side outer layer portion TG2, and calculating the ratio of the area occupied by pores in such WT cross section. As a specific method, the targeted WT cross section is imaged by a scanning electron microscope (SEM), the area of the field of view and the area occupied by the pores are obtained from analysis of the captured SEM image, and the pore ratio Pwt (%) can be calculated by the formula: pore ratio Pwt (%) = area occupied by pores / area of field of view $\times$ 100.

As shown in relational expression (1), by making the pore ratio Pw smaller than the pore ratio Pwt by a predetermined amount to raise the density of the dielectric layers 20 in the first lateral surface-side outer layer portion WG1 or the second lateral surface-side outer layer portion WG2, it is possible to reduce or prevent moisture penetration from the outside and improve moisture resistance.

The pore ratio Pl (%) of the first end surface-side outer layer portion or the second end surface-side outer layer portion and the pore ratio Plt (%) of the first main surface-side outer layer portion or the second main surface-side outer layer portion satisfy the following relational expression (2).

$$1.6 \leq Plt-Pl \leq 3.1 \quad ... \quad (2)$$

The pore ratio Pl of the dielectric constituting the first end surface-side outer layer portion LG1 or the second end surface-side outer layer portion LG2 can be obtained by targeting an LT cross section of a dielectric region located at the middle in the length direction L and at the middle in the lamination direction T of the first end surface-side outer layer portion LG1 positioned between the active portion 11 and the first end surface LS1 or the second end surface-side outer layer portion LG2 positioned between the active portion 11 and the second end surface LS2, and calculating the ratio of the area occupied by pores in this LT cross section. As a specific method, the targeted LT cross section is imaged by a scanning electron microscope (SEM), the area of the field of view and the area occupied by the pores are obtained from analysis of the captured SEM image, and the pore ratio Pl (%) can be calculated by the formula: pore ratio Pl (%) = area occupied by pores / area of field of view $\times$ 100.

Further, the pore ratio Plt of the first main surface-side outer layer portion TG1 or the second main surface-side outer layer portion TG2 can be obtained by targeting an LT cross section of a region located in the lamination direction T from the region where the pore ratio Pl of the dielectric in the first end surface-side outer layer portion LG1 positioned between the active portion 11 and the first end surface LS1 or the second end surface-side outer layer portion LG2 positioned between the active portion 11 and the second end surface LS2 is measured, and located at the middle of the thickness in the lamination direction T of the first main surface-side outer layer portion TG1 or the second main surface-side outer layer portion TG2, and calculating the ratio of the area occupied by pores in this LT cross section. As a specific method, the targeted LT cross section is imaged by a scanning electron microscope (SEM), the area of the field of view and the area occupied by the pores are obtained from analysis of the captured SEM image, and the pore ratio Plt (%) can be calculated by the formula: pore ratio Plt (%) = area occupied by pores / area of field of view $\times$ 100.

As shown in relational expression (2), by making the pore ratio Pl smaller than the pore ratio Plt by a predetermined amount to raise the density of the dielectric layers 20 in the first end surface-side outer layer portion LG1 or the second end surface-side outer layer portion LG2, it is possible to reduce or prevent moisture penetration from the outside and improve moisture resistance.

(Manufacturing Method of Multilayer Ceramic Capacitor 1)

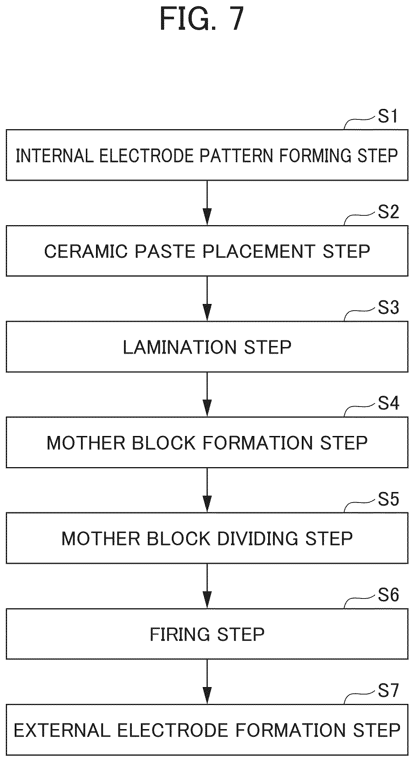

Next, an example of a manufacturing method of the multilayer ceramic capacitor 1 according to the embodiment will be described. FIG. 7 is a flowchart for explaining the manufacturing method of the multilayer ceramic capacitor 1.

(Internal Electrode Layer Pattern Formation Step S1)

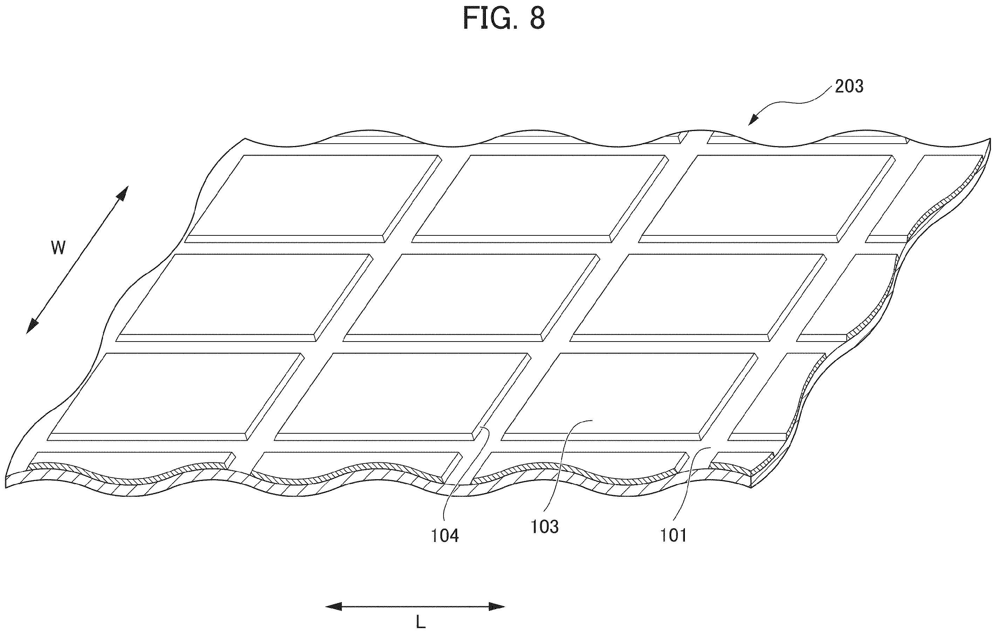

First, an internal electrode layer pattern 103 functioning as the internal electrode layer 30 is formed on a ceramic green sheet 101 functioning as the dielectric layer 20 using an electrically conductive paste. FIG. 8 is a perspective view of a material sheet 203 on which an internal electrode layer pattern 103 functioning as the internal electrode layer 30 is printed on the surface of the ceramic green sheet 101.

(Ceramic Green Sheet 101)

The ceramic green sheet 101 is a strip-shaped sheet formed by molding a ceramic slurry containing ceramic powder, binder, and solvent into a sheet shape on a carrier film using a die coater, gravure coater, microgravure coater, or the like.

(Internal Electrode Layer Pattern 103)

The internal electrode layer pattern 103 is formed by, for example, printing such as screen printing, gravure printing, or relief printing.
Here, the internal electrode layer pattern 103 forms step differences 104 on the ceramic green sheet 101 due to its thickness. In the embodiments, each of the step differences 104 is a sloped surface.

(Ceramic Paste Placement Step S2)

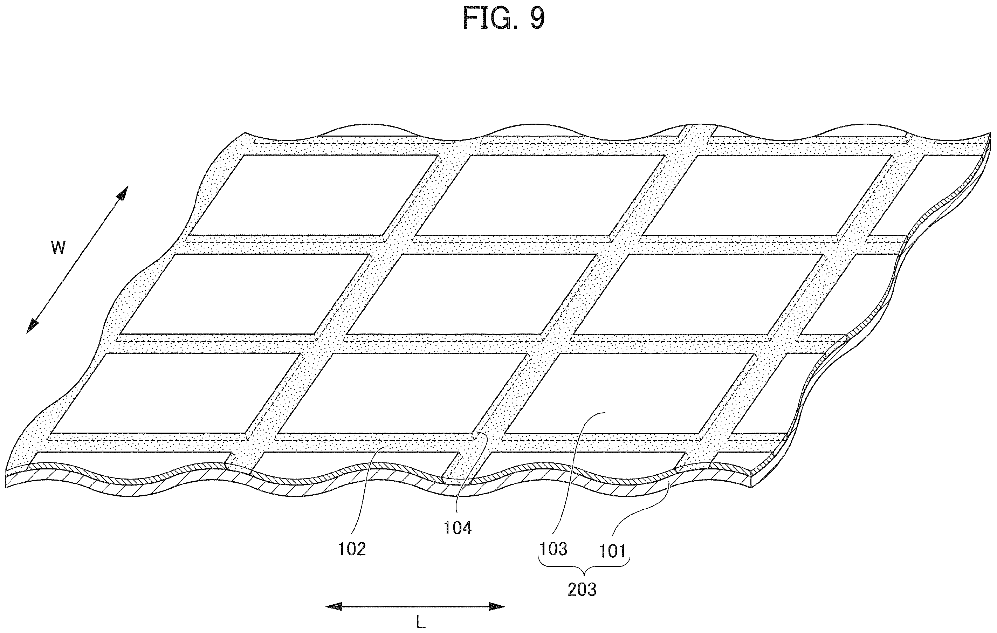

Next, the ceramic paste 102 for forming a dielectric layer is placed on the material sheet 203 so as to fill the step differences 104 due to the thickness of the internal electrode layer pattern 103. FIG. 9 is a perspective view showing a state where the ceramic paste 102 is placed on the material sheet 203.

The ceramic paste 102 includes a lower content of polyvinyl chloride (PVC) and a relatively higher content of ceramic than the ceramic slurry for forming the ceramic green sheet 101 and an upper outer layer portion ceramic green sheet 212 and a lower outer layer portion ceramic green sheet 213 described later. Therefore, when fired in the firing step S6 described later, dense dielectric layers are formed in the lateral surface-side outer layer portion WG and the end surface-side outer layer portion LG of the multilayer body 10 to which the ceramic paste 102 is applied. Accordingly, the pore ratio Pw of the lateral surface-side outer layer portion WG and the pore ratio Pl of the end surface-side outer layer portion LG can be reduced lower than the pore ratios Pwt and Plt in the main surface-side outer layer portion TG.

The ceramic paste 102 is applied, for example, by printing such as screen printing, gravure printing or relief printing. The thickness of the ceramic paste 102 is preferably 0.4 times or more and 0.8 times or less the thickness of the ceramic green sheet 101.

(Lamination Step S3)

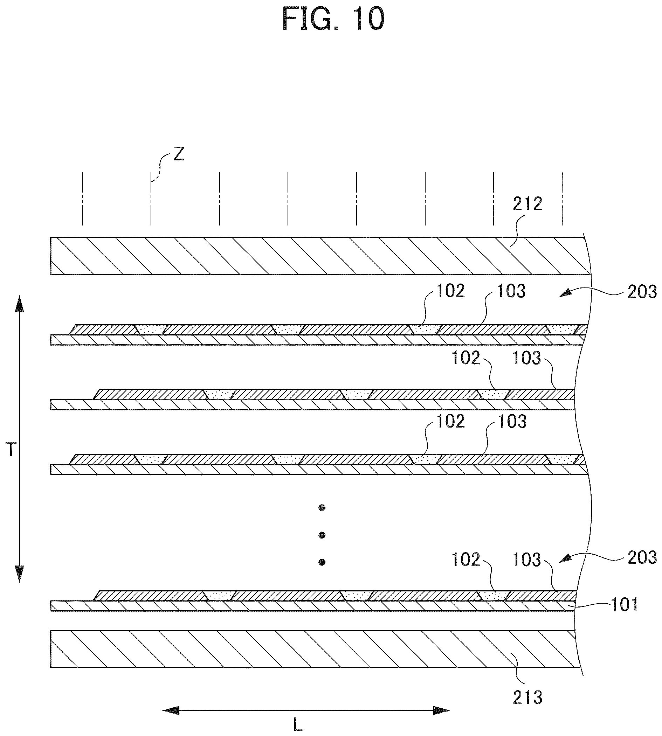

FIG. 10 is a diagram for explaining the lamination state of the material sheet 203. As shown in FIG. 10, the material sheet 203 is arranged such that adjacent internal electrode layer patterns 103 in the lamination direction T are alternately offset in the length direction L.

Furthermore, the upper outer layer portion ceramic green sheet 212 functioning as the first main surface-side outer layer portion TG1 is laminated on one side of the plurality of material sheets 203 that are stacked, and the lower outer layer portion ceramic green sheet 213 functioning as the second main surface-side outer layer portion TG2 is stacked on the other side thereof.

(Mother Block Formation Step S4)

Next, the upper outer layer portion ceramic green sheet 212, the plurality of material sheets 203 that are stacked, and the lower outer layer portion ceramic green sheet 213 are subjected to hydrostatic pressing to form a mother block.

(Mother Block Dividing Step S5)

Next, the mother block is cut at the positions Z shown in FIG. 10. Although only the cutting positions Z in the length direction L are shown, the multilayer body 10 is also cut at predetermined cutting positions in the width direction W extending in a direction perpendicular to the position Z extending in the width direction, such that a plurality of rectangular multilayer bodies 10 before firing are manufactured.

FIG. 6 is an exploded perspective view schematically illustrating the laminated state of the dielectric layers 20 and the internal electrode layers 30 in the multilayer body 10. During manufacturing of the multilayer ceramic capacitor 1, the ceramic paste 102 is printed on regions of the material sheet 203 where internal electrode layer patterns 103 are not provided. The material sheet 203 has the internal electrode layer patterns 103 that function as the internal electrode layers 30 printed on ceramic green sheets 101 that function as the dielectric layers 20. Such material sheets 203 having the internal electrode layer patterns 103 and the ceramic paste 102 printed on the ceramic green sheets 101 are laminated and fired in the firing step S6 described later to manufacture the multilayer body 10.

Since the ceramic paste 102 is applied around the internal electrode layer patterns 103, even when pressed from the lamination direction T during lamination, the periphery of the internal electrode layer patterns 103 does not extend, such that it is possible to maintain the shape of the internal electrode layer patterns 103. Therefore, when viewing a cross section of the multilayer body 10 parallel to the width direction W and the lamination direction T at the middle portion in the length direction L, the length in the width direction of the range where respective one-side ends of the internal electrode layers 30 are provided adjacent to each other in the width direction W can be 1 μm or more and 15 μm or less. This makes it possible to accurately form the effective portion 11 that generates capacitance, such that it is possible to enable a reduction in size and increase in capacity of the multilayer ceramic capacitor 1.

Furthermore, when viewing the multilayer body 10 in a cross section parallel to the width direction W and the lamination direction T at the middle portion in the length direction L, a length Ew in the width direction W of an internal electrode layer 30 located at the middle portion in the lamination direction T, and a length Es in the width direction W of an internal electrode layer 30 closest to the first main surface TS1 or the second main surface TS2 satisfy the following relational expression (3) for $Es/Ew \times 100$ (%).

$$95 \leq Es/Ew \times 100 \leq 101 \ ... \ (3)$$

By providing the ceramic paste 102 and filling the step differences 104 due to the thickness of the internal electrode layer patterns 103, it is possible to reduce or prevent flow of the internal electrode layer patterns 103 during press processing. By reducing or preventing the flow of the internal electrode layer patterns 103 in this manner, it is possible to control the width dimension of the effective portion 11 and satisfy the relational expression (3). Furthermore, by satisfying the relational expression (3), it is possible to reduce the volume of the lateral surface-side outer layer portions WG and secure a large effective portion 11.

(Firing Step S6)

In the firing step, each of the multilayer chips is subjected to debinding treatment and firing treatment to form the base body. Through the firing treatment, the electrically conductive paste layer and the green sheet for manufacturing the dielectric layer are cofired to be the internal electrode layers 30 and the dielectric layers 20, respectively. The conditions for the debinding treatment can be determined according to the type of organic binder contained in the green sheet and the electrically conductive paste layer. In addition, the firing treatment is required to be performed at a temperature at which the multilayer chip is sufficiently densified. The firing temperature is preferably 900°C to 1400°C, depending on the materials of the dielectric and internal electrode layers.

(External Electrode Formation Step S7)

In the external electrode formation step, the external electrodes 40 are formed on the multilayer body 10 to manufacture the multilayer ceramic capacitor 1. The formation of the external electrodes 40 can be performed using known techniques. For example, a base electrode layer, an electrically conductive resin layer, or a direct plated layer is formed on the end surface LS where the internal electrode layers 30 of the multilayer body 10 extend toward and are exposed, and further, a plated layer is provided as needed. In the present embodiment, a Ni plated layer and a Sn plated layer are formed on the fired layer. The Ni plated layer and Sn plated layer are sequentially formed by, for example, a barrel plating method. With such a configuration, it is possible to manufacture multilayer ceramic capacitors.

Although embodiments of the present invention have been described above, the present invention is not limited to the embodiments, and can be implemented in various modes without departing from the gist of the present invention.

EXPLANATION OF REFERENCE NUMERALS

1 multilayer ceramic capacitor
10 multilayer body
11 effective portion
20 dielectric layer
30 internal electrode layer
31 first internal electrode layer
31A first counter portion
31B first extension portion
32 second internal electrode layer
32A second counter portion
32B second extension portion
40 external electrode
40A first external electrode
40B second external electrode
TS1 first main surface
TS2 second main surface
WS1 first lateral surface
WS2 second lateral surface
LS1 first end surface
LS2 second end surface
TG main surface-side outer layer portion
TG1 first main surface-side outer layer portion
TG2 second main surface-side outer layer portion
WG lateral surface-side outer layer portion
WG1 first lateral surface-side outer layer portion
WG2 second lateral surface-side outer layer portion

LG end surface-side outer layer portion
LG1 first end surface-side outer layer portion
LG2 second end surface-side outer layer portion

**Claims**

1. A multilayer ceramic capacitor comprising:

a multilayer body including a plurality of dielectric layers and a plurality of internal electrode layers that are laminated; and external electrodes each provided to be electrically conductive with the internal electrode layers, wherein
the multilayer body includes a first main surface and a second main surface opposed to each other in a lamination direction in which the plurality of dielectric layers and the plurality of internal electrode layers are laminated, a first lateral surface and a second lateral surface opposed to each other in a width direction that intersects both the lamination direction and a length direction in which each of the plurality of internal electrode layers extends toward a corresponding one of the external electrodes, and a first end surface and a second end surface opposed to each other in the length direction that intersects the lamination direction and the width direction,
each of the external electrodes is on one of the first end surface or the second end surface,
in the multilayer body, when a region where the plurality of internal electrode layers overlap each other when viewed in the lamination direction is defined as an effective portion, opposing regions sandwiching the effective portion in the width direction are defined as a first lateral surface-side outer layer portion and a second lateral surface-side outer layer portion, opposing regions sandwiching the effective portion in the length direction are defined as a first end surface-side outer layer portion and a second end surface-side outer layer portion, and opposing regions sandwiching the effective portion, the first lateral surface-side outer layer portion, the second lateral surface-side outer layer portion,
the first end surface-side outer layer portion, and the second end surface-side outer layer portion in the lamination direction are defined as a first main surface-side outer layer portion and a second main surface-side outer layer portion,
a pore ratio Pw (%) of the first lateral surface-side outer layer portion or the second lateral surface-side outer layer portion and a pore ratio Pwt (%) of the first main surface-side outer layer portion or the second main surface-side outer layer portion satisfy the following relational expression (1):

$$1.6 \leq Pwt-Pw \leq 3.1 \ldots (1).$$

2. A multilayer ceramic capacitor comprising:

a multilayer body including a plurality of dielectric layers and a plurality of internal electrode layers that are laminated; and external electrodes each provided to be electrically conductive with the internal electrode layers, wherein
the multilayer body includes a first main surface and a second main surface opposed to each other in a lamination direction in which the plurality of dielectric layers and the plurality of internal electrode layers are laminated, a first lateral surface and a second lateral surface opposed to each other in a width direction that intersects both the lamination direction and a length direction in which each of the plurality of internal electrode layers extends toward a corresponding one of the external electrodes, and a first end surface and a second end surface opposed to each other in the length direction that intersects the lamination direction and the width direction,
each of the external electrodes is on one of the first end surface or the second end surface,
in the multilayer body, when a region where the plurality of internal electrode layers overlap each other when viewed in the lamination direction is defined as an effective portion, opposing regions sandwiching the effective portion in the width direction are defined as a first lateral surface-side outer layer portion and a second lateral surface-side outer layer portion, opposing regions sandwiching the effective portion in the length direction are defined as a first end surface-side outer layer portion and a second end surface-side outer layer portion, and opposing regions sandwiching the effective portion, the first lateral surface-side outer layer portion, the second lateral surface-side outer layer portion, the first end surface-side outer layer portion, and the second end surface-side outer layer portion in the lamination direction are defined as a first main surface-side outer layer portion and a second main surface-side outer layer portion,

a pore ratio Pl (%) of the first end surface-side outer layer portion or the second end surface-side outer layer portion and
a pore ratio Plt (%) of the first main surface-side outer layer portion or the second main surface-side outer layer portion satisfy the following relational expression (2):

$$1.6 \leq Plt-Pl \leq 3.1 \ ... \ (2).$$

3. The multilayer ceramic capacitor according to claim 1 or 2, wherein when the multilayer body is viewed in a cross section parallel to the width direction and the lamination direction at a middle portion in the length direction, a length in the width direction of a range where respective one-side ends of the plurality of internal electrode layers in the width direction are aligned is 1 $\mu$m or more and 15 $\mu$m or less.

4. The multilayer ceramic capacitor according to claim 1 or 2, wherein when the multilayer body is viewed in a cross section parallel to the width direction and the lamination direction at a middle portion in the length direction, a length Ew in the width direction of one of the plurality of internal electrode layers at a middle portion in the lamination direction and a length Es in the width direction of one of the plurality of internal electrode layers closest to the first main surface or the second main surface satisfy the following relational expression (3):

$$95 \leq Es/Ew \times 100 \leq 101 \ ... \ (3).$$

# FIG. 1

# FIG. 2

FIG. 3

EP 4 738 406 A1

# FIG. 4

EP 4 738 406 A1

# FIG. 5

EP 4 738 406 A1

# FIG. 6

# FIG. 7

```
                                              ⌒ S1
┌─────────────────────────────────────────────┐
│  INTERNAL ELECTRODE PATTERN FORMING STEP     │
└─────────────────────────────────────────────┘
                      │
                      ▼                        ⌒ S2
┌─────────────────────────────────────────────┐
│       CERAMIC PASTE PLACEMENT STEP           │
└─────────────────────────────────────────────┘
                      │
                      ▼                        ⌒ S3
┌─────────────────────────────────────────────┐
│             LAMINATION STEP                  │
└─────────────────────────────────────────────┘
                      │
                      ▼                        ⌒ S4
┌─────────────────────────────────────────────┐
│       MOTHER BLOCK FORMATION STEP            │
└─────────────────────────────────────────────┘
                      │
                      ▼                        ⌒ S5
┌─────────────────────────────────────────────┐
│       MOTHER BLOCK DIVIDING STEP             │
└─────────────────────────────────────────────┘
                      │
                      ▼                        ⌒ S6
┌─────────────────────────────────────────────┐
│               FIRING STEP                    │
└─────────────────────────────────────────────┘
                      │
                      ▼                        ⌒ S7
┌─────────────────────────────────────────────┐
│    EXTERNAL ELECTRODE FORMATION STEP         │
└─────────────────────────────────────────────┘
```

# FIG. 8

EP 4 738 406 A1

# FIG. 9

EP 4 738 406 A1

# FIG. 10

## INTERNATIONAL SEARCH REPORT

International application No.

**PCT/JP2024/023573**

### A. CLASSIFICATION OF SUBJECT MATTER

***H01G 4/30***(2006.01)i
FI:  H01G4/30 201N; H01G4/30 201M; H01G4/30 512

According to International Patent Classification (IPC) or to both national classification and IPC

### B. FIELDS SEARCHED

Minimum documentation searched (classification system followed by classification symbols)

H01G4/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2011-124530 A (SAMSUNG ELECTRO-MECHANICS CO., LTD.) 23 June 2011 (2011-06-23)<br>paragraphs [0020]-[0024], [0034]-[0036], [0051], fig. 1, 2 | 1-4 |
| Y | JP 2003-17356 A (KYOCERA CORPORATION) 17 January 2003 (2003-01-17)<br>paragraphs [0022]-[0025], [0059], [0067], [0098]-[0099], fig. 1-3 | 1-4 |
| A | JP 2002-289456 A (KYOCERA CORPORATION) 04 October 2002 (2002-10-04)<br>fig. 1-4 | 1-4 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **14 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/023573**

| Patent document cited in search report | | | Publication date (day/month/year) | Patent family member(s) | Publication date (day/month/year) |
|---|---|---|---|---|---|
| JP | 2011-124530 | A | 23 June 2011 | US 2011/0141655 A1 paragraphs [0023]-[0027], [0037]-[0039], table 1, fig. 1, 2 KR 10-2011-0065623 A | |
| JP | 2003-17356 | A | 17 January 2003 | US 2003/0016484 A1 paragraphs [0172]-[0176], [0217]-[0220], [0228], [0264]-[0266], fig. 6-8 GB 2376207 A CN 1423288 A | |
| JP | 2002-289456 | A | 04 October 2002 | (Family: none) | |

Form PCT/ISA/210 (patent family annex) (July 2022)

**EP 4 738 406 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014150240 A